**Europäisches Patentamt**

(19) **European Patent Office**

**Office européen des brevets**

(11) **EP 1 161 699 B1**

(12) **EUROPÄISCHE PATENTSCHRIFT**

(45) Veröffentlichungstag und Bekanntmachung des Hinweises auf die Patenterteilung:
**15.10.2003 Patentblatt 2003/42**

(21) Anmeldenummer: **00926668.5**

(22) Anmeldetag: **11.03.2000**

(51) Int Cl.⁷: $G02B\ 6/34$, $G02B\ 6/13$

(86) Internationale Anmeldenummer:
**PCT/DE00/00722**

(87) Internationale Veröffentlichungsnummer:
**WO 00/054083 (14.09.2000 Gazette 2000/37)**

(54) **FASER-TRANSMISSIONSBAUELEMENT ZUR ERZEUGUNG CHROMATISCHER DISPERSION**

FIBER TRANSMISSION ELEMENT FOR GENERATING A CHROMATIC DISPERSION

COMPOSANT DE TRANSMISSION A FIBRE OPTIQUE POUR LA GENERATION D'UNE DISPERSION CHROMATIQUE

(84) Benannte Vertragsstaaten:
**AT BE CH CY DE DK ES FI FR GB GR IE IT LI LU MC NL PT SE**

(30) Priorität: **12.03.1999 DE 19911182**

(43) Veröffentlichungstag der Anmeldung:
**12.12.2001 Patentblatt 2001/50**

(73) Patentinhaber: **Tektronix Munich GmbH 85757 Karlsfeld (DE)**

(72) Erfinder:
- **NOWAK, Walter**
  **D-01187 Dresden (DE)**
- **PEUPELMANN, Jens**
  **D-09599 Freiberg (DE)**
- **SAUER, Michael**
  **D-01217 Dresden (DE)**
- **BAUMANN, Ingolf**
  **D-01127 Dresden (DE)**
- **MEISSNER, Johann**
  **D-01097 Dresden (DE)**
- **PALME, Dieter**
  **D-80993 München (DE)**
- **BANDEMER, Adalbert**
  **D-85757 Karlsfeld (DE)**

(74) Vertreter: **Schurack, Eduard F. et al Hofstetter, Schurack & Skora Balanstrasse 57 81541 München (DE)**

(56) Entgegenhaltungen:
**EP-A- 0 826 990         EP-A- 0 829 740
US-A- 4 953 939         US-A- 5 430 817
US-A- 5 818 987**

- **HINTON K: "DISPERSION COMPENSATION USING APODIZED BRAGG FIBER GRATINGS IN TRANSMISSION" JOURNAL OF LIGHTWAVE TECHNOLOGY,US,IEEE. NEW YORK, Bd. 16, Nr. 12, Dezember 1998 (1998-12), Seiten 2336-2346, XP000826333 ISSN: 0733-8724**
- **LITCHINITSER N M ET AL: "DISPERSION OF CASCADED FIBER GRATINGS IN WDM LIGHTWAVE SYSTEMS" JOURNAL OF LIGHTWAVE TECHNOLOGY,US,IEEE. NEW YORK, Bd. 16, Nr. 8, 1. August 1998 (1998-08-01), Seiten 1523-1529, XP000786588 ISSN: 0733-8724**
- **KY N H ET AL: "EFFICIENT BROADBAND INTRACORE GRATING LP01-LP02 MODE CONVERTERS FOR CHROMATIC-DISPERSION COMPENSATION" OPTICS LETTERS,US,OPTICAL SOCIETY OF AMERICA, WASHINGTON, Bd. 23, Nr. 6, 15. März 1998 (1998-03-15), Seiten 445-447, XP000753367 ISSN: 0146-9592**

**Beschreibung**

**Technisches Gebiet.**

Die Erfindung bezieht sich auf ein Transmissionsbauelement zur Erzeugung chromatischer Dispersion.

Standardfasern weisen beispielsweise für den Wellenlängenbereich des Erbium-Faserverstärkers, d. h. für Wellenlängen $\lambda$ um 1550 nm eine anormale Dispersion mit einem Dispersionsparameter $D \approx 17$ ps pro nm Bandbreite und pro km Faserlänge auf. Um diese - störende - Dispersion zu kompensieren, ist der Einsatz von Bauelementen mit entgegengesetzter, d.h. normaler Dispersion (negativer Dispersionsparameter D) geeigneter, der Länge der zu kompensierenden Standardfaser angepaßter Größe erforderlich.

**Stand der Technik**

Zur Erzeugung einer negativen Dispersion mit einer für die Kompensation der Dispersion von Standardfasern und insbesondere von Glasfasern geeigneten Größe werden bislang in der Praxis Kompensationsfasern eingesetzt. Diese haben den Nachteil, daß sie aufgrund der erforderlichen Länge einen großen Platzbedarf haben und sehr teuer sind.

Aus der DE 35 24 527 A1 ist es bekannt, als Kompensationselemente, die die gewünschte negative Dispersion erzeugen, gechirpte Faser-Bragg-Gitter einzusetzen. "Gechirpt" bedeutet, daß der Reflexionsort im Faser-Bragg-Gitter wellenlängenabhängig ist, so daß die Laufwege und damit die Laufzeiten wellenlängenabhängig sind; hierdurch erhält man die gewünschte (negative) Dispersion, die beispielsweise die Dispersion einer Standardfaser bestimmter Länge kompensieren kann.

Nachteilig bei dem aus der DE 35 24 527 A1 bekannten Kompensationselement ist, daß das dispersionsbeaufschlagte reflektierte Signal durch einen 3 dB-Faserkoppler oder nach der Beschreibung dieser Druckschrift bevorzugt durch einen Zirkulator abgezweigt wird. Der zusätzliche 3 dB-Faserkoppler hat den gravierenden Nachteil von 6 dB Leistungsverlust optisch, entsprechend 12 dB elektrisch. Der Zirkulator wiederum ist ein teueres Zusatzelement.

Weiterhin haben N.M. Litchinitser et al. in dem Artikel "Fiber Bragg gratings for dispersion compensation in transmission", erschienen in J. Lightwave Technol. 15 (1997) S. 1303 beschrieben, daß die an den Bandgrerizen der in Transmission benutzten Faser-Bragg-Gitter auftretenden Dispersionseffekte dazu ausgenutzt werden können, das Faser-Bragg-Gitter als Zweitor zu verwenden. Dabei sind jedoch gegenüber der Reflexion an gechirpten Gittern nur bescheidene Ergebnisse zu erwarten.

Bekannt ist auch, daß Faser-Bragg-Gitter, die (als die klassische Anwendung) bei einer Wellenlänge die Fasergrundwelle reflektieren, bei anderen Wellenlängen in andere Moden reflektieren. Dieser Effekt wird als kontradirektionale Modenkopplung bezeichnet. Bei entsprechender Dimensionierung liegt eine reflektierende Modenwandlung vor.

In der EP 0 826 990 A1 wird beschrieben, daß die kontradirektionale Modenkopplung in Mantelmoden zur Erzielung von Dämpfungseffekten verwendet werden kann. Weiterhin wird in der EP 0 829 740 A3 vorgeschlagen, die kontradirektionale Modenkopplung in geführte Moden, z.B. in den $LP_{11}$-Modus, zur Realisierung von Dämpfungselementen mit unterschiedlichen Frequenzcharakteristiken auszunutzen.

Bekannt sind ferner sogenannte langperiodische Fasergitter, die kodirektionale Modenkopplung, d. h. Modenwandlung in Transmissionsrichtung, bewirken. Kodirektionale Kopplung in Mantelmoden wird in der US-PS 5 430 817 und in geführte Moden in der US-PS 5 818 987 jeweils zur Erzielung von Filtereffekten vorgeschlagen.

In dem Vortrag "Dispersion compensation using only fiber Bragg gratings" von P. Petruzzi et al., Optical Fiber Conference (OFC) 1999, Vortrag FA5, S. 14 des Konferenzbandes, wird gezeigt, daß durch drei Gitter, von denen mindestens eines gechirpt ist, statt des reflektierenden Dispersionseintores ein transmittierendes Dispersionszweitor realisiert und so der Zirkulator vermieden werden kann. Hiernach koppelt das zweite Gitter die eingespeiste $LP_{01}$-Welle unter kontradirektionaler Modenwandlung in einen ersten Mantelmodus zurück zum ersten Gitter, wo eine kontradirektionale Modenwandlung (nun wieder in Vorwärtsrichtung) in einen zweiten Mantelmodus erfolgt, der im dritten Gitter kodirektional (es muß sich also um ein langperiodisches Gitter handeln) in die $LP_{01}$-Grundwelle gekoppelt wird. Es wird offensichtlich eine Standard-Singlemodefaser verwendet.

Ein erster zumindest für die vorliegende experimentelle Ausführung auch angeführter Nachteil ist die geringe Koppeleffizienz zu den Mantelmoden sowie insbesondere auch die Koppeleffizienz zwischen den Mantelmoden. Ein zweiter Nachteil besteht in der Benutzung der zwei Mantelmoden, da diese durch Umgebungseffekte und insbesondere durch Faserkrümmungen viel stärker beeinflußt werden als geführte Moden. Ein weiterer Nachteil ist die Benutzung eines langperiodischen Gitters, dessen Filtercharakteristik nicht so gut beherrschbar ist wie die von Bragg-Gittern und die wesentlich größere Baulängen erfordern.

Auf die vorstehend genannten Druckschriften wird im übrigen zur Erläuterung aller hier nicht explizit erläuterten technischen Ausführungen und/oder Anwendungen ausdrücklich Bezug genommen.

**Darstellung der Erfindung**

Aufgabe der Erfindung ist es, ein Bauelement anzugeben, das eine bestimmte, vorgebbare normale oder anormale Dispersion bei kleiner Baugröße und geringen Kosten sowie mit möglichst geringen Verlusten erzeugt.

Eine erfindungsgemäße Lösung dieser Aufgabe ist im Patentanspruch 1 angegeben. Weiterbildungen der Erfindung sowie eine Verwendung sind Gegenstand der Ansprüche 2 folgende.

Erfindungsgemäß wird ein Transmissionsbauelement zur Erzeugung einer vorgebbaren (positiven oder negativen) chromatischen Dispersion geschaffen, das beispielsweise dazu geeignet ist, die Dispersion eines Glasfaser-Lichtwellenleiters zu kompensieren. In dem erfindungsgemäßen Bauelement ist nicht nur der $LP_{01}$-Grundmodus, sondern auch zumindest eine $LP_{mn}$-Mode führbar. Hierzu weist das erfindungsgemäße Transmissionsbauelement zwei Paare von Bragg-Gittern auf, von denen beispielsweise jedes Paar wenigstens ein gechirptes Bragg-Gitter aufweisen kann. Bei dem erfindungsgemäßen Transmissionsbauelement reflektiert in jedem Paar das eine Bragg-Gitter die einlaufende Strahlung in etwa entgegen der Einfallsrichtung zurück auf das andere Bragg-Gitter dieses Paares, von dem der Lichtstrahl in urspünglichen Richtung der Strahlung oder zumindest parallel dazu läuft.

Insbesondere im Hinblick auf die Herstellkosten ist es besonders bevorzugt, daß die Bragg-Gitter kontradirektional modenkoppelnde Faser-Bragg-Gitter sind, die bevorzugt in dem Glasfaser-Lichtwellenleiter erzeugt sind. Dabei können neben normalen Fasern auch Spezialfasern verwendet werden, in denen nicht nur der $LP_{01}$-Grundmodus, sondern auch einige weitere Moden geführt werden. Dabei kann die Koppeleffizienz dieser Fasern und die Spreizung der Phasenkoeffizienten durch ein geeignetes Dotierungsmaterial und Dotierungsprofil optimiert werden.

Weist das erste gechirpte Faser-Bragg-Gitter eintrittsseitig die größere Gitterkonstante und austrittsseitig die kleinere Gitterkonstante auf, so steigt die Laufzeitdifferenz mit kürzer werdender Wellenlänge an. Dreht man die Chirprichtung des oder der Gitter um, so steigt die Laufzeitdifferenz mit länger werdender Wellenlänge an. Durch die Wahl der Chirprichtung kann also eingestellt werden, ob das erfindungsgemäße Bauelement normale oder anormale Dispersion eines vor- oder nachgeschalteten Elements und insbesondere einer Übertragungsstrecke kompensieren soll. Durch eine geeignete Wahl des Verlaufs des Chirps läßt sich auch ein Übergang von normaler zu anormaler Dispersion erreichen.

Dabei ist es bevorzugt, wenn alle Bragg-Gitter gechirpt sind, und/oder die beiden Gitter jeweils eines Paares unterschiedliche Gitterkonstanten (bereiche) mit insbesondere entgegengesetztem Chirp aufweisen. Gechirpte Gitter zeichnen sich dadurch aus, daß über ihre Länge die Gitterkonstante durch eine vorgegebene Funktion beschrieben wird. Im allgemeinen ist diese Funktion eine monotone, nicht konstante Funktion. Aufgrund der unterschiedlichen Ausbreitungsmodi weisen die Gitter i.a. unterschiedliche Chirpbereiche und damit Gitterkonstantenbereiche auf.

Bei einer besonders bevorzugten Ausgestaltung der Erfindung ist das Transmissionsbauelement so ausgebildet, daß im zu nutzenden Wellenlängenbereich erst das zweite Gitter des ersten Paares die eingangsseitig eingespeiste $LP_{01}$-Grundwelle (Modus I) in einen Zwischenmodus (Modus II) kontradirektional modenkoppelt, daß das erste Gitter den Zwischenmodus kontradirektional, also wieder in Vorwärtsrichtung, in einen dritten Modus (Modus III) modenkoppelt, daß das vierte Gitter den dritten Modus kontradirektional wieder in den Zwischenmodus (Modus II) modenkoppelt, und daß das dritte Gitter den Zwischenmodus kontradirektional, also wieder in Vorwärtsrichtung, in die $LP_{01}$-Grundwelle (Modus I) modenkoppelt, die nach Durchgang durch das vierte Gitters infolge des Chirps der Gitter ausgangsseitig dispersionsbeaufschlagt austritt.

Der Aufbau einer besonders bevorzugten Ausgestaltung der Erfindung kann damit wie folgt beschrieben werden:

Es werden Spezialfaser mit zwei Paaren von Faser-Bragg-Gittern benutzt; in jedem Paar erfolgt eine zweimalige unbeeinflußte Transmission der Signalwelle durch Faser-Bragg-Gitter und eine zweimalige Richtungsumkehr durch zweimalige kontradirektionale Modenkopplung. Dafür müssen drei unterschiedliche Moden benutzt werden. Im ersten Gitterpaar erfolgt die Kopplung vom $LP_{01}$-Grundmodus (erster Modus) über einen Zwischenmodus (zweiter Modus) in einen dritten Modus, im zweiten Gitterpaar vom dritten Modus über z.B. den gleichen Zwischenmodus zurück in die $LP_{01}$-Grundwelle.

Dimensionierungshinweise werden im anhand der Zeichnung beschriebenen Ausführungsbeispiel gegeben.

Vorteilhafterweise werden in dem mehrmodigen Glasfaser-Lichtwellenleiter die rotationssymmetrischen Moden $LP_{02}$ und $LP_{03}$ benutzt. Es können aber auch nichtrotationssymmetrische Moden, wie der $LP_{11}$-Modus benutzt werden. Dann sind die Faser-Bragg-Gitter geringfügig schräg zur Faserachse zu erzeugen. Neben zwei geführten Moden kann auch ein Mantelmodus benutzt werden. Gegenüber dem im zitierten Vortrag von P. Petruzzi et al. gemachten Vorschlag wird die Modenkopplung zwischen Mantelmoden vermieden, so daß eine deutliche größere Koppeleffizienz erhalten wird.

Das erfindungsgemäße Bauelement kann eine Dispersionkompensation über ein große Bandbreite ausführen. Eine große Bandbreite des Bauelements erfordert eine große und möglichst äquidistante Spreizung der Phasenkoeffizienten der zu koppelnden Moden und eventueller Störmoden. Diese liegt z. B. beim parabolischen LWL vor. In dessen Kern nimmt die Brechzahl quadratisch über dem Radius ab.

Die Koppeleffektivität unterschiedlicher Moden in Faser-Bragg-Gittern kann verbessert werden, wenn neben radialen Bereichen mit der üblichen $GeO_2$-Dotierung auch Bereiche mit F- und/oder $B_2O_3$-Dotierung benutzt werden.

**Kurze Beschreibung der Zeichnung**

Die Erfindung wird nachfolgend anhand der Zeichnung näher erläutert, in der zeigt:

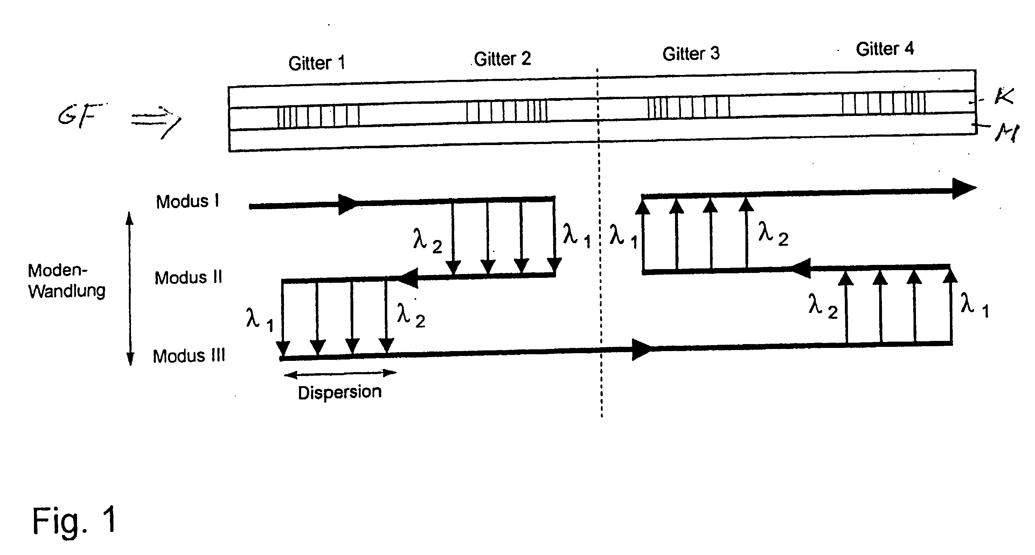

Fig. 1      ein Ausführungsbeispiel der Erfindung.

**Darstellung eines Ausführungsbeispiels**

Fig. 1 zeigt eine Faser - insbesondere eine Glasfaser - GF mit einem Kern K und einem Mantel M; im Kern K sind bei dem gezeigten Ausführungsbeispiel vier Faser-Bragg-Gitter 1 bis 4 erzeugt. Die Gitter 1 und 2 bilden das erste Paar, während die Gitter 3 und 4 das zweite Paar bilden.

Die Faser-Bragg-Gitter eines Paares weisen unterschiedliche Gitterkonstantenbereiche auf und sind bei dem gezeigten Ausführungsbeispiel mit einem Chirp dargestellt, der bei den Gittern in einem Paar jeweils entgegengesetzt ist. Die Gitter können in bekannter Weise durch Brechungsindexvariation im Grundmaterial der Faser hergestellt werden. Zur Erzeugung des Brechzahlprofils kann beispielsweise die Glasfaser GF mit $GeO_2$, F- und/oder $B_2O_3$ dotiert werden. Alternativ ist auch eine Erzeugung des Brechzahlprofils durch Ionenaustausch oder andere bekannte Verfahren möglich.

Ferner ist im unteren Teil der Zeichnung der Modendurchlauf, d.h. die Modenwandlung zwischen den Moden I, II und III durch die Gitter 1..4 des erfindungsgemäßen Bauelements, d.h. die in den einzelnen Gittern erfolgende Modenwandlung schematisch dargestellt.

Kontradirektionale Modenkopplung erfolgt, wenn zwischen den Phasenkoeffizienten $\beta_1$ und $\beta_2$ der zu koppelnden Moden und der Gitterperiodenlänge $\Lambda$ die Beziehung

$$\Lambda = 2\pi / (\beta_1 + \beta_2)$$

gilt. In Fig. 1 passiert die. einlaufende $LP_{01}$-Grundwelle, die sich im Modus I befindet, das Gitter 1 unbeeinflußt, da

$$\Lambda_i \neq 2\pi / (\beta_I + \beta_i) \qquad i\ \text{beliebig}$$

gilt. Sie wird wegen

$$\Lambda_2 = 2\pi / (\beta_I + \beta_{II})$$

am Gitter 2 als Modus II reflektiert, der am Gitter 1 wegen

$$\Lambda_i = 2\pi / (\beta_{II} + (\beta_{III}))$$

als Modus III wieder in Vorwärtsrichtung reflektiert wird und das Gitter 2 wegen

$$\Lambda_2 \neq 2\pi / (\beta_{III} + \beta_i) \qquad i\ \text{beliebig}$$

unbeeinflußt passiert. Im zweiten Gitterpaar von Fig. 1 mit $\Lambda_4 = \Lambda_1$ und $\Lambda_3 = \Lambda_2$, wiederholen sich die beschriebenen Passagen und Modenkopplungen in umgekehrter Reihenfolge und Richtung. Vom Modus III wird in Gitter 4 kontradirektional in den Zwischenmodus II und von diesem in Gitter 3 kontradirektional (wieder in Vorwärtsrichtung) in die $LP_{01}$-Grundwelle (Modus I) gekoppelt.

Erfolgt ein entgegengesetzter Chirp der Gitter wie in Fig. 1 angedeutet, so erkennt man, daß bei dem gezeigten Ausführungsbeispiel in allen Gittern für die kürzeste Wellenlänge $\lambda_1$ der weiteste, für die längste Wellenlänge $\lambda_2$ der kürzeste Weg zurückzulegen ist. Es addiert sich die Wirkung aller Gitter, die Gesamtlänge entspricht etwa der eines konventionellen, reflektierenden Dispersionskompensationsgitters. Da die Gruppenlaufzeit $t_g$ etwa proportional der Weglänge ist, wird $dt_g/d\lambda < 0$. Das bedeutet, es wird eine normale Dispersion erzeugt. Selbstverständlich ist es aber auch möglich, den Chirp "umzudrehen", so daß eine anormale Dispersion erzeugt wird.

Vorstehend ist die Erfindung anhand eines Ausführungsbeispiels ohne Beschränkung des allgemeinen Erfindungsgedankens und der allgemeinen Anwendbarkeit beschrieben worden. Selbstverständlich sind die verschiedensten Abwandlungen möglich:

So können anstelle von vier gechirpten Faser-Bragg-Gittern nur zwei gechirpte - beispielsweise im ersten Paar - und zwei ungechirpte Faser-Bragg-Gitter im anderen Paar verwendet werden. Die gechirpten Faser-Bragg-Gitter sorgen für die Weg- und damit die Laufzeitdifferenz, während die ungechirpten Faser-Bragg-Gitter lediglich die Transformation zwischen den verschiedenen Moden bewirken, und/oder zusätzlich eine wellenlängenselektive Filterung durchführen.

Weiterhin können zur Erhöhung der Weg-Unterschiede und damit der Laufzeitdifferenz mehrere erfindungsgemäße Anordnungen hintereinander geschaltet bzw. angeordnet werden.

## Gewerbliche Anwendbarkeit

Die erfindungsgemäß äusgebildeten Bauelemente können für alle Anwendungen eingesetzt werden, bei denen die Bereitstellung einer normalen Dispersion einer bestimmten, durch den jeweiligen Anwendungsfall vorgegebenen Größe erforderlich ist. Insbesondere können die erfindungsgemäßen Bauelemente zur Kompensation der anormalen Dispersion von Glasfasern, wie sie beispielsweise für die Datenübertragung genutzt werden, eingesetzt werden. Die Größe der von den erfindungsgemäßen Bauelementen aufgebrachten Dispersion ist dann von der Länge der zu kompensierenden Glasfaserstrecke abhängig.

Die (ungefähre) Größe der Laufzeit-Differenz zwischen den Extremwerten der auftretenden Wellenlängen $\lambda_1$ und $\lambda_2$, die die kompensierbare anormale Dispersion bestimmt, wird durch die Ausbildung der einzelnen Faser-Bragg-Gitter in der Faser GF eingestellt. Eine einstellbare Dispersion und damit einer variable Einstellung der Laufzeit-Differenz und somit der Abgleich auf veränderliche chromatische Dispersionen der anzuschließenden Übertragungsfasern kann durch das Aufbringen von definierten mechanischen Kräften - Zug-, Dehn- und/oder Druckspannungen - und/oder durch die Einstellung bzw. Thermostatisierung der Faser-Bragg-Gitter erfolgen.

## Patentansprüche

1. Transmissionsbauelement zur Erzeugung einer vorgebbaren chromatischen Dispersion mit

   - einem Glasfaser-Lichtwellenleiter (GF), in dem zumindest drei Moden führbar sind, und
   - einem ersten, einem zweiten, einem dritten und einem vierten Bragg-Gitter, zwischen denen der Glasfaser-Lichtwellenleiter (GF) angeordnet ist,

   wobei das erste bis vierte Bragg-Gitter derart ausgebildet sind, daß eine einlaufende Welle in einem ersten Modus das erste Bragg-Gitter passiert; anschließend im zweitem Bragg-Gitter in einen zweiten Modus kontradirektional modengekoppelt wird, welcher im ersten Bragg-Gitter kontradirektional in einen dritten Modus modengekoppelt wird, welcher das zweite und dritte Bragg-Gitter passiert und im vierten Bragg-Gitter kontradirektional in den zweiten Modus gekoppelt wird, welcher im dritten Bragg-Gitter kontradirektional wieder in den ersten Modus modengekoppelt wird, welcher das vierte Bragg-Gitter passiert.

2. Transmissionsbauelement nach Anspruch 1, bei dem die vier Bragg-Gitter kontradirektional modenkoppelnde Faser-Bragg-Gitter sind, die insbesondere in dem Glasfaser-Lichtwellenleiter (GF) erzeugt sind.

3. Transmissionsbauelement nach einem der Ansprüche 1 oder 2, mindestens ein Bragg-Gitter, bevorzugt eines des ersten oder zweiten Bragg-Gitters und eines des dritten oder vierten Bragg-Gitters, noch bevorzugter alle Bragg-Gitter gechirpt sind.

4. Transmissionsbauelement nach einem der vorhergehenden Ansprüche, bei dem das erste und das zweite Bragg-Gitter ein Paar bilden und das dritte und vierte Bragg-Gitter ein Paar bilden, wobei die beiden Gitter jeweils eines Paares unterschiedliche Gitterkonstantenbereiche und entgegengesetzten Chirp aufweisen.

5. Transmissionsbauelement nach einem Ansprüche 3 oder 4, bei dem im zu nutzenden Wellenlängenbereich die einlaufende Welle infolge des Chirps dispersionsbeaufschlagt aus dem vierten Gitter austritt.

6. Transmissionsbauelement nach einem der vorhergehenden Ansprüche, bei dem zur Erzeugung der Bragg-Gitter im Kem der Glasfaser ein parabolisches Brechzahlprofil vorgesehen ist.

7. Transmissionsbauelement nach Anspruch 6, bei dem zur Erzeugung des Brechzahlprofils die Glasfaser mit $GeO_2$, F- und/oder $B_2O_3$ dotiert ist.

8. Transmissionsbauelement nach einem der vorhergehenden Ansprüche, bei dem die Moden die geführten rotationssymmetrischen Moden $LP_{01}$, $LP_{02}$ und $LP_{03}$ sind.

9. Transmissionsbauelement nach einem der Ansprüche 1 bis 7, bei dem nichtrotationssymmetrische geführte Moden, namentlich der $LP_{11}$-Modus, benutzt werden, wobei die Bragg-Gitter in dem Glasfaser-Lichtwellenleiter nicht senkrecht, sondern schräg zur Faserachse angeordnet sind.

10. Transmissionsbauelement nach einem der Ansprüche 1 bis 7, bei dem die Moden zwei geführten Moden und ein Mantelmodus sind.

11. Transmissionsbauelement nach einem der vorhergehenden Ansprüche, bei dem zur Dispersionskompensation 1. Ordnung die vier Bragg-Gitter linear gechirpt sind oder zur Dispersionskompensation auch höherer Ordnung eines oder auch mehrere der vier Bragg-Gitter abweichend von der Linearität gechirpt sind.

**12.** Transmissionsbauelement nach einem der vorhergehenden Ansprüche, bei dem
zur genauen Einstellung der Laufzeitdifferenz zwischen den Extremwerten der verwendeten Wellenlängen definierte mechanische Kräfte auf die Faser aufgebracht und/oder die Temperatur der Faser innerhalb eines bestimmten Temperaturbereichs auf einen geeigneten Wert thermostatisiert wird.

**13.** Transmissionsbauelement mit erhöhter chromatischer Dispersion, bei dem
mehrere der Elemente nach einem der Ansprüche 1 bis 12 in Reihe geschaltet sind.

**14.** System aus einem Transmissionsbauelement nach einem der vorhergehenden Ansprüche und daran angeschlossene Fasern, bei dem
der Modenfeldradius des Glasfaser-Lichtwellenleiters (GF) im wesentlichen den gleichen Modenfeldradius aufweist wie die an ihn angeschlossenen Fasern.

**15.** Verwendung eines Transmissionsbauelements nach einem der Ansprüche 1 bis 13 zur Kompensation der Dispersion von Glasfaser-Strecken.

**Claims**

**1.** A transmission element for generating a predetermined chromatic dispersion, having

- a glass fiber optical waveguide (GF) in which it is possible to carry at least three modes, and
- a first, a second, a third and a fourth Bragg grating between which the glass fiber optical waveguide (GF) is positioned,

wherein the first to fourth Bragg gratings are developed such that a wave, which is fed in in a first mode, passes through the first Bragg grating, subsequently is mode-coupled contradirectionally into a second mode in the second Bragg grating, the second mode being mode-coupled contradirectionally into a third mode in the first Bragg grating, which passes through the second and third Bragg gratings and is mode-coupled contradirectionally into the second mode in the fourth Bragg grating, the second mode being mode-coupled contradirectionally once again into the first mode in the third Bragg grating, which passes through the fourth Bragg grating.

**2.** The transmission element according to claim 1, in which the four Bragg gratings are contradirectionally mode-coupling fiber Bragg gratings, which are produced in particular in the glass fiber optical waveguide (GF).

**3.** The transmission element according to one of the claims 1 or 2, in which at least one Bragg grating, preferably one of the first or second Bragg gratings and one of the third or fourth Bragg gratings, still more preferably all Bragg gratings are chirped.

**4.** The transmission element according to one of the preceding claims, in which the first and the second Bragg grating form a pair and the third and the fourth Bragg grating form a pair, wherein the two gratings in each pair have different grating constant ranges and opposite chirp.

**5.** The transmission element according to one of the claims 3 or 4, in which in the wavelength band that is to be used the wave which is fed in emerges at the fourth grating with dispersion applied to it by virtue of the chirp.

**6.** The transmission element according to one of the preceding claims, in which a parabolic refractive index profile is provided in the core of the glass fiber in order to generate the Bragg gratings.

**7.** The transmission element according to claim 6, in which the glass fiber is doped with $GeO_2$, F- and/or $B_2O_3$ in order to generate the refractive index profile.

**8.** The transmission element according to one of the preceding claims, in which the modes that are carried are the rotationally symmetrical modes $LP_{01}$, $LP_{02}$ and $LP_{03}$.

**9.** The transmission element according to one of the claims 1 to 7, in which non-rotationally symmetrically carried modes, namely the $LP_{11}$ mode are used, with the Bragg gratings not being positioned at right angle, but obliquely with respect to the fiber axis in the glass fiber optical waveguide.

**10.** The transmission element according to one of the claims 1 to 7, in which the modes are two modes which are carried and are a cladding mode.

**11.** The transmission element according to one of the preceding claims, in which the four Bragg gratings are chirped linearly for first-order dispersion compensation, or one or more of the four Bragg gratings are chirped nonlinearly for higher-order dispersion compensation.

**12.** The transmission element according to one of the preceding claims, in which to precisely set the propagation time between the extreme values for the wavelengths that are used, defined mechanical forces are applied to the fiber, and/or the temperature of the fiber is thermally stabilized at a suitable value within a specific temperature range.

13. The transmission element having increased chromatic dispersion in which a number of the elements according to one of the claims 1 to 12 are connected in series.

14. System consisting of a transmission element according to one of the preceding claims and fibers connected to it, in which the mode field radius of the glass fiber optical waveguide (GF) essentially has the same mode field radius as the fibers connected to it.

15. Use of a transmission element according to one of the claims 1 to 13 in order to compensate for the dispersion in glass fiber paths.

**Revendications**

1. Composant de transmission destiné à générer une dispersion chromatique susceptble d'être prédéfinie et comportant :

   - une fibre optique de verre (GF) dans laquelle peuvent être guidés au moins trois modes et
   - un premier, un deuxième, un troisième et un quatrième réseau de Bragg entre lesquels est disposée la fibre optique de verre (GF),

   le premier jusqu'au quatrième réseau de Bragg étant réalisés de manière à ce qu'une onde incidente passe dans un premier mode le premier réseau de Bragg pour subir dans un deuxième réseau de Bragg un couplage contradirectionnel en un deuxième mode lequel est couplé de manière contradirectionnelle, dans un premier réseau de Bragg, en un troisième mode. lequel passe les deuxième et troisième réseaux de Bragg et lequel, dans le quatrième réseau de Bragg, est couplé de manière contradirectionnelle dans le deuxième mode, lequel, dans le troisième réseau de Bragg, est couplé à nouveau de manière contradirectionnelle dans le premier mode, lequel passe le quatrième réseau de Bragg.

2. Composant de transmission selon la revendication 1 dans lequel les quatre réseaux de Bragg sont des réseaux de Faser-Bragg à couplage de modes contradirectionnel qui sont générés notamment dans la fibre optique de verre (GF).

3. Composant de transmission selon l'une des revendications 1 ou 2 dans lequel au moins un réseau de Bragg, de manière avantageuse un du premier ou du deuxième réseau de Bragg et un du troisième ou du quatrième réseau de Bragg, de manière encore plus avantageuse, tous les réseaux de Bragg sont chirpés.

4. Composant de transmission selon l'une des revendications précédentes dans lequel le premier et le deuxième réseau de Bragg forment une paire et le troisième et le quatrième réseau de Bragg forment une paire, les deux réseaux de chaque paire ayant des zones de constante de réseau différentes et un chirp opposé.

5. Composant de transmission selon l'une des revendications 3 ou 4 dans lequel, dans la gamme d'ondes susceptible d'être utilisée, l'onde incidente, alimentée en dispersion, sort du quatrième réseau par suite du chirp.

6. Composant de transmission selon l'une des revendications précédentes dans lequel, pour la génération des réseaux de Bragg, un profil de l'indice de réfraction parabolique est prévu dans le noyau de la fibre de verre.

7. Composant de transmission selon la revendication 6 dans lequel, pour la génération du profil de l'indice de réfraction, la fibre de verre est dopée en $GeO_2$, F et/ou en $B_2O_3$.

8. Composant de transmission selon l'une des revendications précédentes dans lequel les modes sont les modes guidés à symétrie de révolution $LP_{01}$, $LP_{02}$ et $LP_{03}$.

9. Composant de transmission selon l'une des revendications 1 à 7 dans lequel sont utilisés des modes guidés dépourvus de symétrie de révolution, à savoir le mode $LP_{11}$, le réseau de Bragg n'étant pas disposé dans la fibre optique de verre de manière verticale, mais de manière oblique à l'axe de la fibre.

10. Composant de transmission selon l'une des revendications 1 à 7 dans lequel les modes sont deux modes guidés et un mode gaine.

11. Composant de transmission selon l'une des revendications précédentes dans lequel, pour la compensation de la dispersion du $1^{er}$ ordre, les quatre réseaux de Bragg sont chirpés de manière linéaire ou dans lequel, pour la compensation de la dispersion aussi d'ordre élevé, un ou plusieurs des quatre réseaux de Bragg sont chirpés de manière non linéaire.

12. Composant de transmission selon l'une des revendications précédentes dans lequel pour le réglage précis de la différence du temps de propagation entre les valeurs extrêmes des longueurs d'ondes utilisées, des efforts mécaniques définis sont appliqués à la fibre et/ou la température de la fibre est thermostabilisée à une valeur appropriée à l'intérieur d'une plage de température déterminée.

13. Composant de transmission à dispersion chromatique accrue dans lequel plusieurs des éléments selon l'une des revendications 1 à 12 sont connectés en série.

14. Système réalisé à partir d'un composant de transmission selon l'une des revendications précédentes et des fibres y raccordées dans lequel le rayon du champ de mode de la fibre optique de verre (GF) présente un rayon du champ de mode sensiblement identique à celui des fibres y raccordées.

15. Utilisation d'un composant de transmission selon l'une des revendications 1 à 13 pour compenser la dispersion de lignes de fibres optiques.

EP 1 161 699 B1

Gitter 1    Gitter 2    Gitter 3    Gitter 4

GF ⇒

$K$

$M$

Modus I

Moden-Wandlung

$\lambda_2$    $\lambda_1$    $\lambda_1$    $\lambda_2$

Modus II

$\lambda_1$    $\lambda_2$    $\lambda_2$    $\lambda_1$

Modus III

Dispersion

Fig. 1